# EUROPEAN PATENT APPLICATION

(11) **EP 1 726 864 A1**
(43) Date of publication of application: **29.11.2006**
(21) Application number: 06252480.6
(22) Date of filing: 11.05.2006
(51) Int. Cl.: F16L 27/11, F01D 9/06

(54) **Gas turbine expansion joint and method of assembling same**

(30) Priority: 27.05.2005 US 139190
(71) Applicant: The General Electric Company, Schenectady NY 12345 (US)
(72) Inventor: Storage, Michael Ralph, Beavercreek, OH 45434 (US); Millward, Douglas Randall, Beavercreek, OH 45434 (US)
(74) Representative: Pedder, James Cuthbert

(57) **Abstract**

This invention relates generally to gas turbine engines, and, more specifically, to expansion joints therein for accommodating differential thermal movement of fluid carrying components.
A method for assembling an expansion joint (100) includes providing a first seal retainer (120), positioning an annular first seal (142) at least partially within the first seal retainer such that the first seal extends between the first seal retainer first and second ends (144,145) and substantially fills the first seal retainer cavity (140), providing a second seal retainer (122), positioning an annular second seal (143) at least partially within the second seal retainer such that the second seal extends between the second seal retainer first and second ends (146,147) and substantially fills the second seal retainer cavity (141), coupling a bellows (174) to the first and second seal retainers, and slidably coupling a unitary annular shroud (180) the first and second seal retainers such that the shroud substantially circumscribes the first and second seal retainers, and such that the bellows is operable in conjunction with the annular shroud and the first and second seal retainers.

## Description

This invention relates generally to gas turbine engines, and, more specifically, to expansion joints therein for accommodating differential thermal movement of fluid carrying components.

Gas turbine engines generally include, in serial flow arrangement, a high-pressure compressor for compressing air flowing through the engine, a combustor in which fuel is mixed with the compressed air and ignited to form a high temperature gas stream, and a high pressure turbine. The high-pressure compressor, combustor and high-pressure turbine are sometimes collectively referred to as the core engine. Such gas turbine engines also may include a low-pressure compressor, or booster, for supplying compressed air to the high pressure compressor.

At least one known gas turbine engine utilizes compressed air, from the compressor, to facilitate cooling various gas turbine engine components. More specifically, compressed air is channeled from the compressor, through various conduits and joints, to the turbine to facilitate cooling components within the turbine. Accordingly, at least some known conduits are subjected to differential thermal movement and vibratory excitation during gas turbine engine operation.

For example, at least one known fluid carrying joint used in the bleed air system, includes ball and socket joints which allow relative pivotal movement, with the joints also being configured to accommodate differential translation between adjacent ends of the conduits. However, at least one known ball joint may cause undesirable leakage in view of the various differential pivotal and translation movements to which the joint is subjected to during operation, as well as due to vibratory excitation. More specifically, as the ball joints wear during operation, leakage therefrom becomes an increasing problem until the traditional ball joints require replacement at a relatively substantial cost.

Additionally, at least one known gas turbine engine includes a type of flex joint commonly referred to as a non-metallic seal. Non-metallic seals typically include an elastomeric seal that facilitates preventing leakage of the fluid contained within the ducting system while still allowing flexibility in the flex joint. However, during use, the non-metallic seals may become brittle causing them to leak at higher temperatures. Moreover, at least one known non-metallic seal includes an outrigger that is configured to secure the non-metallic seal to the piping components. Accordingly, known non-metallic seals operate in compression and include a plurality of external components to secure the outrigger to the piping components, thus increasing the costs of the non-metallic seal. Moreover, since known seals include a plurality of external components, assembling a known seal is relatively time consuming, thus further increasing the cost of the seal.

In one aspect of the invention a method for assembling an expansion joint is provided. The method includes providing a first seal retainer, positioning an annular first seal at least partially within the first seal retainer such that the first seal extends between the first seal retainer first and second ends and substantially fills the first seal retainer cavity, providing a second seal retainer, positioning an annular second seal at least partially within the second seal retainer such that the second seal extends between the second seal retainer first and second ends and substantially fills the second seal retainer cavity, coupling a bellows to the first and second seal retainers, and slidably coupling a unitary annular shroud the first and second seal retainers such that the shroud substantially circumscribes the first and second seal retainers, and such that the bellows is between the annular shroud and the first and second seal retainers.

In another aspect of the invention, an expansion joint is provided. The expansion joint includes an annular first seal retainer having a cavity that is defined between a first end and a second end, an annular first seal positioned at least partially within the first seal retainer such that the first seal substantially fills the first seal retainer cavity, the first seal extends between the first seal retainer first and second ends, an annular second seal retainer having a cavity that is defined between a first end and a second end, an annular second seal positioned at least partially within the second seal retainer such that the second seal substantially fills the second seal retainer cavity, the second seal extends between the second seal retainer first and second ends, a bellows coupled to the first and second seal retainers, and a unitary annular shroud circumscribing, and slidably coupled to, the first and second seal retainers, the bellows between the annular shroud and the first and second seal retainers.

In a further aspect of the invention, a gas turbine engine is provided. The gas turbine engine includes a compressor, a turbine, and a bleed air system configured to channeled compressed air from the compressor to the turbine. The bleed air system includes an expansion joint including an annular first seal retainer having a cavity that is defined between a first end and a second end, an annular first seal positioned at least partially within the first seal retainer such that the first seal substantially fills the first seal retainer cavity, the first seal extends between the first seal retainer first and second ends, an annular second seal retainer having a cavity that is defined between a first end and a second end, an annular second seal positioned at least partially within the second seal retainer such that the second seal substantially fills the second seal retainer cavity, the second seal extends between the second seal retainer first and second ends, a bellows coupled to the first and second seal retainers, and a unitary annular shroud circumscribing, and slidably coupled to, the first and second seal retainers, the bellows between the annular shroud and the first and second seal retainers.

The invention will now be described in greater detail, by way of example, with reference to the drawings, in which:-
Figure 1 is an exemplary aircraft turbofan gas turbine engine having a bleed air system channeling a portion of compressed air to an annular manifold surrounding a low pressure turbine for cooling thereof;
Figure 2 is a radial view of an exemplary articulated air manifold surrounding the low pressure turbine illustrated in Figure 1 and taken generally along line 2--2, and includes a plurality of exemplary expansion joints;
Figure 3 is an elevational, sectional view of an exemplary embodiment of one of the expansion joints illustrated in Figure 2 and taken generally along line 3―3; and
Figure 4 is a perspective, partly cut away view of the exemplary expansion joint illustrated in Figures 2 and 3.

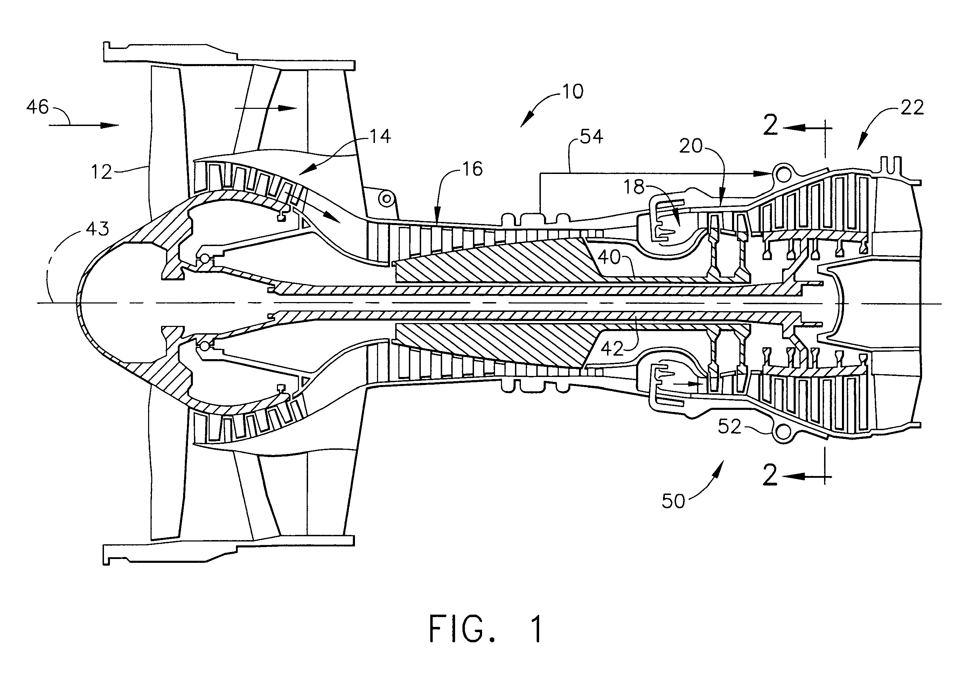

Figure 1 is an axial, partly sectional view of an exemplary aircraft turbofan gas turbine engine 10. Gas turbine engine 10 includes in serial flow communication a fan 12, a low pressure compressor 14, a high pressure compressor 16, a combustor 18, a high pressure turbine 20, and a low pressure turbine 22.

High pressure turbine 20 is coupled to high pressure compressor 16 with a first rotor shaft 40, and low pressure turbine 22 is coupled to low pressure compressor 14 with a second rotor shaft 42. Rotor shafts 40 and 42 are each substantially coaxially aligned with respect to a longitudinal centerline axis 43 of gas turbine engine 10.

In operation, ambient air 46, drawn into low pressure compressor 14, is compressed and channeled downstream to high pressure compressor 16. High pressure compressor 16 further compresses the air and delivers high pressure air to combustor 18 where it is mixed with fuel, and the mixture is ignited to generate high temperature combustion gases. The combustion gases are channeled from combustor 18 to drive turbines 20 and 22.

In the exemplary embodiment, selected components of low pressure turbine 22 are cooled utilizing compressed air that is channeled from a suitable stage of high pressure compressor 16 through a bleed air system 50. In the exemplary embodiment, bleed air system 50 includes an annular, multicomponent air manifold 52 which receives cooling air 54 and suitably disperses cooling air 54 to the various components within the low pressure turbine 22.

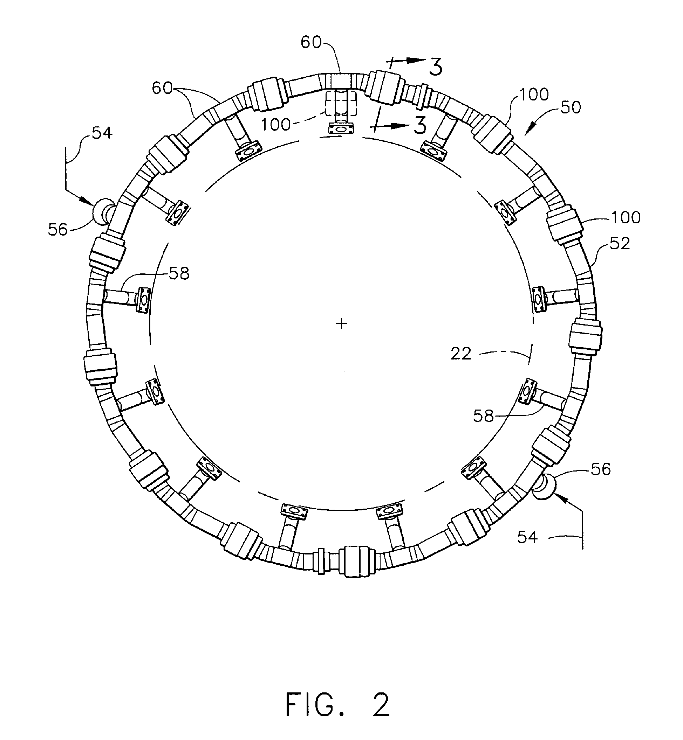

Figure 2 illustrates an exemplary embodiment of manifold 52 surrounding low pressure turbine 22 shown in phantom. Cooling air 54 is suitably channeled into the manifold 52 through a plurality of inlets 56 thereof. Cooling air 54 is then discharged from the manifold 52 into low pressure turbine 22 through a plurality of outlets 58 in the form of radially inwardly extending and axially inclined tubes. In the exemplary embodiment, cooling air 54 is distributed circumferentially around manifold 52 through interconnected fluid carrying conduits indicated generally at 60. In the exemplary embodiment, a plurality of expansion joints 100 are circumferentially spaced apart around the circumference of manifold 52 between adjacent outlets 58 to accommodate differential thermal movement due to expansion and contraction during operation. In an alternative embodiment, expansion joints 100 are located in each of manifold outlet 58, one of which is illustrated in phantom at the 12:00 position in Figure 2.

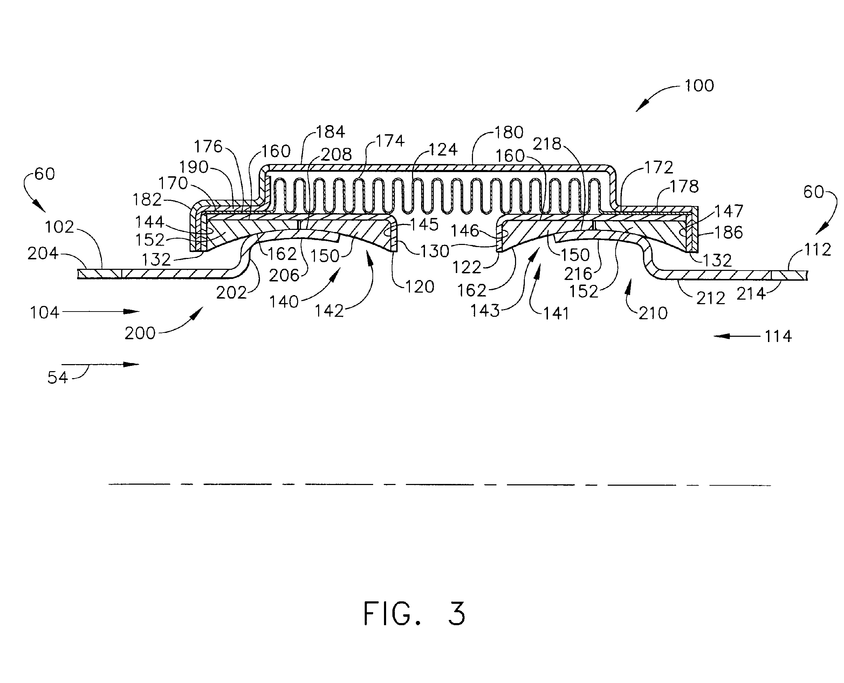

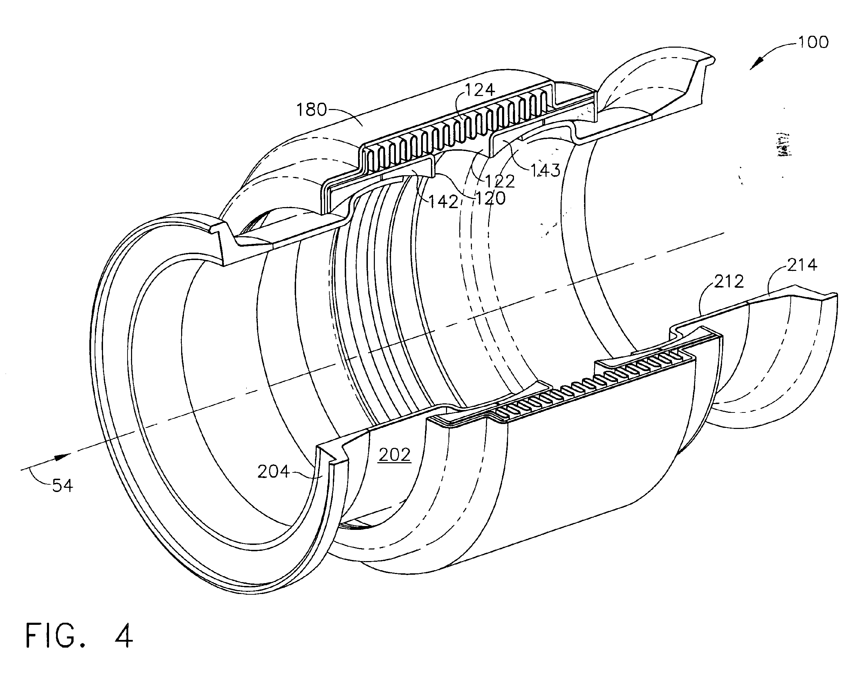

Figure 3 illustrates an exemplary expansion joint 100 wherein the interconnected conduits 60 include at least a first conduit 102 which enters expansion joint 100 from a first side 104, and a second conduit 112 which enters expansion joint 100 from a second side 114, that is opposite first side 104. In the exemplary embodiment, expansion joint 100 carries therethrough and between conduits 60 the cooling air 54. A cutaway perspective view of expansion joint 100 is illustrated in Figure 4.

In the exemplary embodiment, expansion joint 100 includes a first annular seal retainer 120, a second annular seal retainer 122, and an annular bellows assembly 124 that is connected to first and second seal retainers 120 and 122, respectively. More specifically, first and second seal retainers 120 and 122 each include a first portion 130 and a second portion 132 that is coupled to first portion 130 using a welding procedure, for example. In the exemplary embodiment, first portion 130 has a substantially L-shaped cross-sectional profile such that when second portion 132 is coupled to first portion 130, each respective seal retainer 120 and 122, have a substantially U-shaped cross-sectional profile.

Accordingly, and in the exemplary embodiment, first and second portions 130 and 132 define an annular cavity 140 and an annular cavity 141 respectively, therein that is configured to retain at least one seal. More specifically, seal retainers 120 and 122 each include at least one annular seal 142 and 143, respectively, that are inserted at least partially therein. In the exemplary embodiment, each respective seal 142 and 143 is positioned at least partially within each respective seal retainer 120 and 122, such that each respective seal 142 and 143 substantially fills seal retainer cavities 140 and 141, and such that seal 142 extends between a seal retainer first end 144 and a seal retainer second end 145, and such that seal 143 extends between a seal retainer first end 146 and a seal retainer second end 147. In the exemplary embodiment, seals 142 and 143 are fabricated from a graphite material. In an alternative embodiment, seals 142 and 143 is fabricated from a material other than graphite.

In the exemplary embodiment, each seal 142 and 143 includes a first seal portion 150 and a second seal portion 152 that is positioned adjacent first seal portion 150. In an alternative embodiment, each seal 142 and 143 includes a single seal portion such that first and second seal portions 150 and 152 are unitarily formed together to form unitary a seal 142 and 143, respectively. Each seal 142 and 143 includes a radially outer surface 160 and a radially inner surface 162. In the exemplary embodiment, radially outer surface 160 is substantially planar, and radially inner surface 162 is substantially concave.

Bellows assembly 124 includes a first portion 170, a second portion 172, and a bellows 174 that is coupled between first and second portions 170 and 172, respectively. In the exemplary embodiment, first portion 170 is coupled to an exterior surface 176 of seal retainer 120, and second portion 172 is coupled to an exterior surface 178 of seal retainer 122, using a welding procedure for example.

Expansion joint 100 also includes an annular outer shroud 180 that is configured to circumscribe at least a portion of seal retainers 120 and 122, respectively, and bellows assembly 124. In the exemplary embodiment, outer shroud 180 includes a first portion 182, a second portion 184 that is coupled to first portion 182, and a third portion 186 that is coupled to second portion 184. In the exemplary embodiment, second portion 184 substantially circumscribes bellows 174. In the exemplary embodiment, expansion joint 100 also includes a substantially L-shaped retainer 190 that is positioned between outer shroud 180 and exterior surface 176 of seal retainer 120 to facilitate securing at least one end of bellows 174 in a substantially fixed position. More specifically, retainer 190 facilitates bellows first portion 170 in a substantially fixed position. In an alternative embodiment, expansion joint 100 does not include retainer 190.

During assembly, and in the exemplary embodiment, a first substantially tubular fitting 200 having at a proximal end thereof has a cylindrical first sleeve 202 for being fixedly joined to the end of a first conduit 204 using a welding or brazing procedure, for example. Disposed at an opposite, distal end of the first fitting 200 is a first ball 206 which includes a substantially spherical section having a substantially convex annular outer surface 208 such that a sealing contact is created between outer surface 208 and 162 seal inner surface 162. Similarly, a substantially identical tubular second fitting 210 includes at a proximal end thereof a cylindrical second sleeve 212 which is fixedly joined to a corresponding end of a second conduit 214. Second fitting 210 includes a second ball 216 at its distal end which is also a truncated spherical section having a convex annular outer surface 218 such that a sealing contact is created between outer surface 218 and seal inner surface 162.

In the exemplary embodiment, bellows assembly 124 is coupled to seal retainers 120 and 122, respectively. A respective seal 142 is then at least partially inserted into each respective annular cavity 140 formed by each respective seal retainer 120 and 122, respectively. First sleeve 202 is then positioned radially inward of first seal retainer 120 such that a seal is formed between seal inner surface 162 and sleeve outer surface 208. More specifically, first seal portion 150 is inserted into first seal retainer first portion 130, first sleeve 202 is then inserted radially inward of first seal retainer first portion 130. Second seal portion 152 is then inserted between first sleeve retainer first portion 130 and first sleeve 202. First seal retainer second portion 132 is then coupled to first seal retainer first portion 130 to facilitate securing first sleeve 202 in a substantially fixed position within seal retainer 120.

Second sleeve 212 is then positioned radially inward of second seal retainer 122 such that a seal is formed between seal inner surface 162 and sleeve outer surface 216. More specifically, second seal portion 150 is inserted into second seal retainer first portion 130, second sleeve 212 is then inserted radially inward of second seal retainer first portion 130. Second seal portion 152 is then inserted between second seal retainer first portion 130 and second sleeve 212. Second seal retainer second portion 132 is then coupled to second seal retainer first portion 130 to facilitate securing second sleeve 212 in a substantially fixed position within seal retainer 122.

Outer shroud 180 is then coupled to first and second seal retainers 120 and 122, respectively. More specifically, outer shroud second portion 184 is coupled circumferentially around first and second seal retainers 120 and 122 such that outer shroud second portion 184 substantially circumscribes first and second seal retainers 120 and 122. Outer shroud first and third portions 182 and 186 are then coupled to outer shroud second portion 184 to facilitate maintaining first and second seal retainers 120 and 122, and bellows assembly 124 substantially within outer shroud assembly 180.

In the exemplary embodiment, first conduit 204 is then coupled to first sleeve 202, and second conduit 214 is coupled to second sleeve 212 such that airflow 54 can be channeled from a suitable stage of high pressure compressor 16 through a bleed air system 50, through manifold 52, to the various components within the low pressure turbine 22 as described previously herein.

The expansion joint described herein includes at least two graphite seals to allow the expansion joint to be utilized within a plurality of relatively high temperature applications equal to or greater than those of expansion joints currently used in various aerospace applications. Additionally, the expansion joint described herein includes a bellows to apply a force on the structure, i.e. each conduit, to assure a good seal. For example, during operation, as the pressure within the expansion joint increases, the force applied by the bellows to the seals increases to improve the sealing at the higher pressure. Moreover, the expansion joint described herein does not require additional ancillary brackets or external rigging, thus reducing the associated weight, space and cost, of the expansion joint. Moreover, since the expansion joint described herein does not require additional ancillary brackets or external rigging, assembling a known seal is relatively time consuming, thus further increasing the cost of the seal.

Accordingly, the expansion joint described herein is a self contained, light weight flex joint capable of withstanding very high temperatures such as those currently needed in current aerospace applications.

## Claims

1. An expansion joint (100) for joining together first and second fluid conduits (102, 112) comprising:
an annular first seal retainer (120) having a cavity (141) that is defined between a first end (144) and a second end (145);
an annular first seal (142) positioned at least partially within said first seal retainer such that said first seal substantially fills said first seal retainer cavity, said first seal extends between said first seal retainer first and second ends;
an annular second seal retainer (122) having a cavity that is defined between a first end and a second end;
an annular second seal (143) positioned at least partially within said second seal retainer such that said second seal substantially fills said second seal retainer cavity, said second seal extends between said second seal retainer first and second ends;
a bellows (124) coupled to said first and second seal retainers; and
a unitary annular shroud (180) circumscribing, and slidably coupled to, said first and second seal retainers, said bellows between said annular shroud and said first and second seal retainers.

2. An expansion joint (100) in accordance with Claim 1 further comprising:
a first tubular fitting (200) having at a proximal end thereof, a cylindrical sleeve (202) that is coupled to said first conduit (204), and at a distal end thereof a first ball (206) that is in sealing contact with said first seal (142); and
a second tubular fitting (210) having at a proximal end thereof, a cylindrical sleeve (212) that is coupled to said second conduit (214), and at a distal end thereof a second ball (216) that is in sealing contact with said second seal (143).

3. An expansion joint (100) in accordance with Claim 1 wherein said first and second seals (142, 143) each comprises a first seal portion (150) and a second seal portion (152).

4. An expansion joint (100) in accordance with Claim 1 wherein said first and second seals (142, 143) comprises a graphite material.

5. An expansion joint (100) in accordance with Claim 1 wherein said bellows (174) comprises a first end (144) that is fixedly coupled to said shroud (180) to facilitate said bellows expanding in only one direction.

6. An expansion joint (100) in accordance with Claim 1 wherein said bellows (174) is axially compressible for effecting compressive loads in opposite directions on said first and second seal retainers (120, 122) to facilitate said first and second seals (142, 143) in sealing contact with said first and second balls (206, 216).

7. An expansion joint (100) in accordance with Claim 1 wherein said first and second seal retainers (120, 122) each comprise:
a first substantially L-shaped portion (182); and
a second portion (184) that is coupled to said first portion to facilitate retaining each respective seal within said respective seal retainers.

8. A gas turbine engine (10) comprising:
a compressor (14, 16);
a turbine (20, 22); and
a bleed air system (50) configured to channeled compressed air from said compressor to said turbine; said bleed air system comprising
an expansion joint (100)comprising:
an annular first seal retainer (120) having a cavity (140) that is defined between a first end (144) and a second end (145);
an annular first seal (142) positioned at least partially within said first seal retainer such that said first seal substantially fills said first seal retainer cavity, said first seal extends between said first seal retainer first and second ends;
an annular second seal retainer (122) having a cavity (141) that is defined between a first end (146) and a second end (147);
an annular second seal (143) positioned at least partially within said second seal retainer such that said second seal substantially fills said second seal retainer cavity, said second seal extends between said second seal retainer first and second ends;
a bellows (174) coupled to said first and second seal retainers; and
a unitary annular shroud (180) circumscribing, and slidably coupled to, said first and second seal retainers, said bellows between said annular shroud and said first and second seal retainers.

9. A gas turbine engine (10) in accordance with Claim 8 wherein said expansion joint (100) further comprises:
a first tubular fitting (200) having at a proximal end thereof, a cylindrical sleeve (202) that is coupled to said first conduit (204), and at a distal end thereof a first ball (206) that is in sealing contact with said first seal (142); and
a second tubular fitting (210) having at a proximal end thereof, a cylindrical sleeve (212) that is coupled to said second conduit (214), and at a distal end thereof a second ball (216) that is in sealing contact with said second seal (143).

10. A gas turbine engine (10) in accordance with Claim 8 wherein said expansion joint (100) further comprises first and second seals (142, 143) each comprises a first seal portion (170) and a second seal portion (172).
